# EUROPEAN PATENT SPECIFICATION

(11) **EP 1 502 052 B1**
(45) Date of publication and mention of the grant of the patent: **05.03.2008**
(21) Application number: 03723519.9
(22) Date of filing: 25.04.2003
(51) Int. Cl.: F16L 47/00, F16L 15/04

(54) **PIPE CONNECTION FOR PIPE PIECES MADE OF PLASTIC**
ROHRKUPPLUNG FÜR ROHRSTÜCKE AUS KUNSTSTOFF
RACCORD DE TUYAU DESTINE A DES PIECES DE TUYAU EN PLASTIQUE

(30) Priority: 26.04.2002 NL 1020494
(43) Date of publication of application: 02.02.2005
(73) Proprietor: Amipox International Limited, Manama (BH)
(72) Inventor: TOLHOEK, Pieter, B-2970 Schilde (BE)
(74) Representative: Hylarides, Paul Jacques
(86) International application number: PCT/NL2003/000312
(87) International publication number: WO 2003/091617

(56) References cited:
- EP-A- 0 978 677
- DE-A- 3 545 883
- US-A- 5 015 014
- US-A- 5 895 079
- PATENT ABSTRACTS OF JAPAN vol. 1998, no. 11, 30 September 1998 (1998-09-30) & JP 10 153281 A (C I KASEI CO LTD), 9 June 1998 (1998-06-09) cited in the application

## Description

The invention relates to a pipe connection for mutually connecting two pipe pieces made from fibre-reinforced plastic, comprising: an external screw thread arranged on a male end of a first pipe piece, an internal screw thread arranged on a female end of a second pipe piece and fitting onto the external screw thread, and a substantially annular cavity which is placed between the screwed together pipe pieces and which is suitable for filling with a sealing material, wherein the cavity is filled with a solid material.

Such a pipe connection is known from JP-A-10153281.

Such pipe connections are usually applied for transport of gas and oil, while they are also applied in the chemical and petrochemical industry. Plastic pipes have the advantage that even in corrosive environments they are not subject to corrosion, whereby their lifespan is considerably longer than that of steel pipes.

Heretofore it has only been possible to use such plastic pipes to transport fluids under low pressures. Although the pipe pieces are per se suitable for transporting fluids under high pressures, certainly when they are reinforced with fibres, problems occur in the manufacture of the seals between the pipe pieces.

The construction shown in the above stated literature reference makes use of a groove in which is arranged a sealing ring made from deformable material. This annular groove is however arranged on the outward directed side of the screw thread. As a consequence hereof, the seal placed in this groove is subjected to the influences of the environment.

US A 5 895 079 discloses a pipe connection including a female member provided with an internal thread and a male member provided with an external thread. Adjacent the end of the male part an O-ring groove is provided, in which is seated an O-ring. The O-ring engages the female member to provide a substantial degree of sealing against leakage from internal pressures.

It is an object of the present invention to provide a pipe connection with improved sealing properties.

This object is achieved in a pipe connection as claimed in appended claim 1.

By positioning the cavity in the inward directed end of the internal screw thread of the female end, the adhesive will be squeezed in the cavity by force during making-up (by rotation) of the pipe connection, which will give a better sealing of the pipe connection

Also JP 10153281 discloses a pipe connection wherein a cavity is arranged in a male end of a pipe piece.

The object of the invention is to provide such a connection, wherein the sealing ring is not subjected to environmental influences.

This object is achieved in that the cavity is arranged on the inward directed end of the screw thread.

According to a specific preferred embodiment the screw thread has on the outside a rounded profile and on the inside a right-angled profile. The advantages of both profiles, an easy screwing-in and a strong closure, are hereby combined.

By choosing a correct geometry it has become possible to tighten the screw thread connection with a very short rotation, between a half and three-quarter rotation. It has been found that there is a relation between apex angle of the cone, the profile height, the diameter of the pipe piece and the number of threads in the screw thread.

An attempt is made here to arrive at a situation in which the length of the screw thread is long in respect of the usually high pressures against which sealing must take place, but wherein a connection can be made with the shortest possible turn.

The use of a conical screw thread with an apex angle smaller than 0.1°, a diameter between 25 mm and 600 mm, a profile depth of the screw thread between 6 mm and 16 mm, preferably 10 mm, and a four-thread screw thread is found to satisfy the above stated requirements.

A specific advantage of a four-thread screw thread is the fact that it is possible to make a coupling over an angle of 0°, 90°, 180° or 270°, this being important in the case of couplings with elbow fittings.

Apart from this advantage, it is otherwise possible to make use of multi-thread screw thread with a different number of threads.

The cavity is filled with an initially liquid, and then cured material.

A solid material is understood to mean a material which is not compressible, or only compressible to an extremely small extent. A greatly improved seal is hereby obtained so that diffusion is avoided, and a mechanical strength is obtained such that the connection can withstand calamities.

It will be apparent that, in order to obtain a good seal, such a solid material must be manufactured extremely accurately with minimal tolerances. This has a cost-increasing effect.

So as to nevertheless obtain such a good seal of a solid material which can be manufactured at lower cost, the cavity is filled with an initially liquid, and then cured material.

It is important here that the material only cures when the pipe connection is obtained.

Another preferred embodiment teaches that the external and internal screw thread are connected by a glue layer, and that the cavity is filled with the glue with which the screw thread is connected.

Application of glue in the screw thread results in the first place in an improved sealing of the screw thread, but also contributes toward a greater mechanical strength. Using this same material to make the seal in the groove results in a simplification of the operations for making the connection, since only one material need be applied.

When the cavity is filled with the same type of plastic from which the pipe pieces are manufactured, a good adhesion to the pipe pieces is obtained so that the mechanical loading capacity and the sealing are greatly improved.

Instead of arranging an initially liquid sealing ring, it is likewise possible to arrange a sealing ring directly in solid form. This does after all result in a simpler method during connecting. It is herein also possible to connect the sealing ring by means of glue to one or both of the parts. The glue is in any case necessary for mutual connection of the pipe pieces.

Other attractive preferred embodiments are stated in the remaining claims. The present invention will be elucidated hereinbelow with reference to the annexed figures, in which:

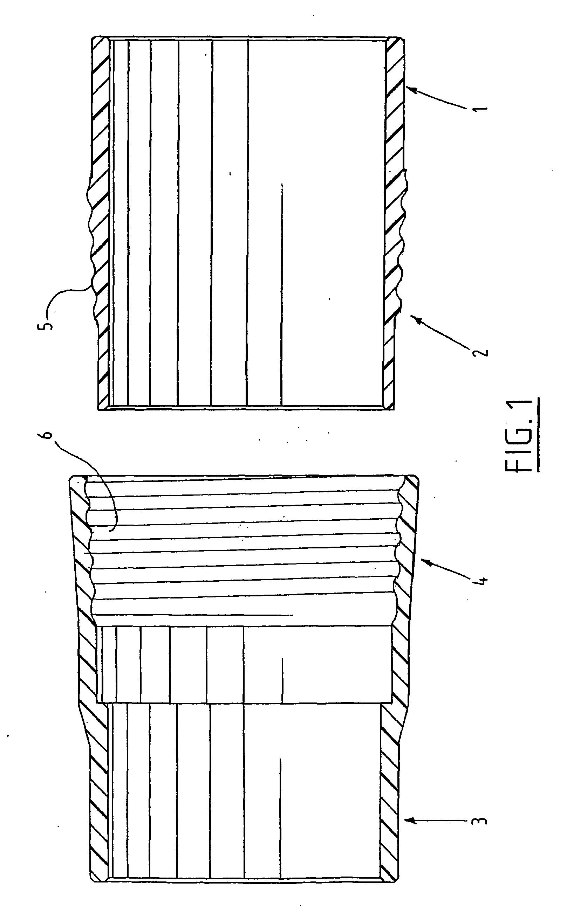

Figure 1 shows a cross-sectional view of pipe pieces to be joined together to form a pipe connection according to the prior art;
Figure 2 shows a cross-sectional view corresponding with figure 1 during applying of glue;
Figure 3 shows a cross-sectional view corresponding with figures 1 and 2 during screwing together of the pipe pieces;
Figure 4 shows a cross-sectional view corresponding with figures 1, 2 and 3 of the completion of the pipe connection;
Figure 5 shows a cross-sectional view of an embodiment of the present invention.

The pipe connection is formed by a pipe piece 1 with a male end 2 and a pipe piece 3 with a female end 4. Both pipe pieces 1, 3 are manufactured from a fibre-reinforced plastic, preferably from epoxy resin reinforced with glass fibres.

Although only short pipe pieces are shown in this figure, it will be apparent that the pipe pieces will generally be longer so as to construct a long pipeline. A pipe piece will therefore have a male part 2 on one side and a female part 4 on the other side. The invention is also applicable to other shapes of pipe piece, such as elbows, T-pieces and the like.

An external screw thread 5 is arranged on the male part 2 of pipe piece 1. This is a conical screw thread with a round profile. In the female end 4 the pipe piece 3 is widened in order to receive the male part 2. The female part is further provided with an internal screw thread 6 which is likewise conical and likewise has a round profile.

The external screw thread 5 fits into internal screw thread 6. It is pointed out here that both screw threads 5, 6 have a describing cone with a half apex angle of 0.6°. In addition, the profile height of the round screw thread is 2 mm. With this combination of dimensioning factors it is possible with only a small number of rotations to obtain a fixed screw thread connection; the one pipe piece can in any case already be inserted a considerable distance into the other before the screw thread parts make mutual contact. When the screw thread is tightened however, a connection is still obtained which extends over the whole of the screw thread.

In combination with the above mentioned dimensioning measures it is attractive if the number of threads of the screw thread amounts to about six; the advantages are hereby optimized.

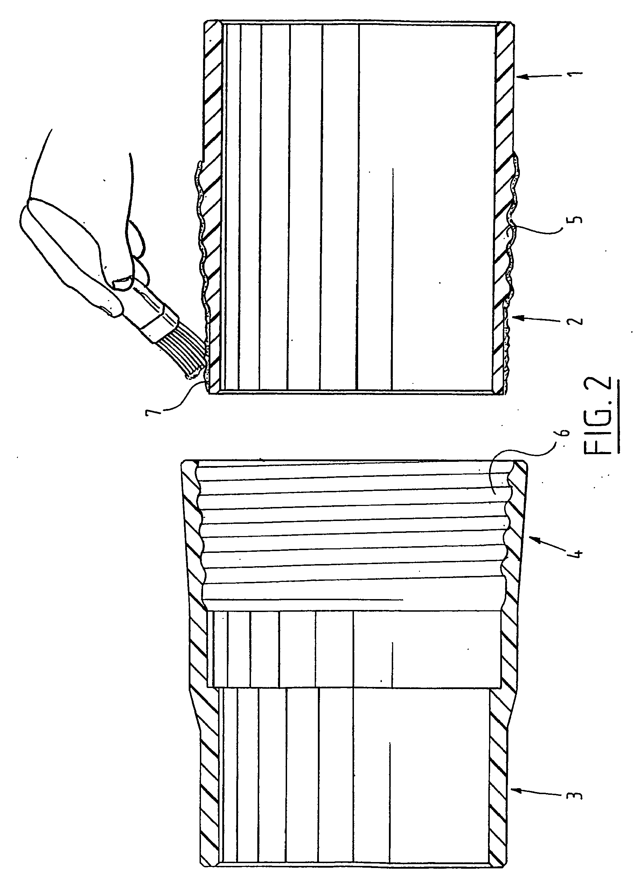

In order to form a connection a glue layer 7 is applied to the outside of male part 2 of pipe piece 1, as shown in figure 2.

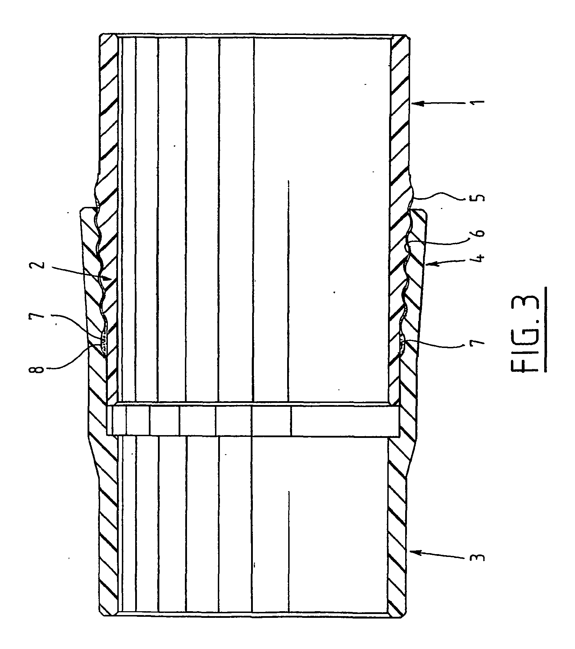

As shown in figure 3, the one pipe piece is then inserted as far as possible into the other. Once the two pipe pieces make contact, at least one of the two pipe pieces is then rotated in the direction of the screw thread, wherein the screw thread will engage.

The situation as shown in figure 3 is then obtained. As can be seen in figure 3, the glue layer 7 will not only spread over the screw thread, but will also move to an annular cavity 8. This is the annular cavity which fulfils an important function in sealing the coupling of the two pipe pieces.

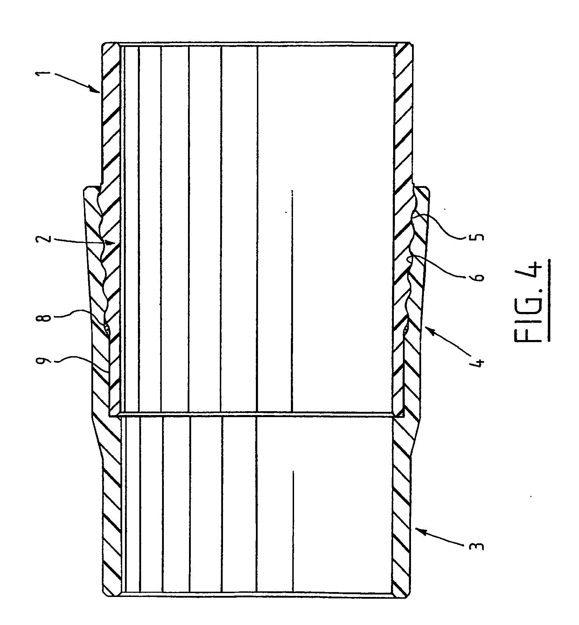

Finally, pipe pieces 1, 3 are tightened fixedly with the prescribed torque, whereafter the situation shown in figure 4 is obtained. Almost all the glue has here been pressed away between the screw thread and there is only glue present in cavity 8. It will be apparent that the rest of the glue has been displaced to the outside and has also been displaced partially to the seam 9 between the two pipe pieces.

The pipe connection must then be cured which, depending on the type of glue applied, can take place by polymerization as a result of heating or by evaporation of a solvent.

In the above described embodiment the annular cavity is arranged connecting directly onto the screw thread in the male part.

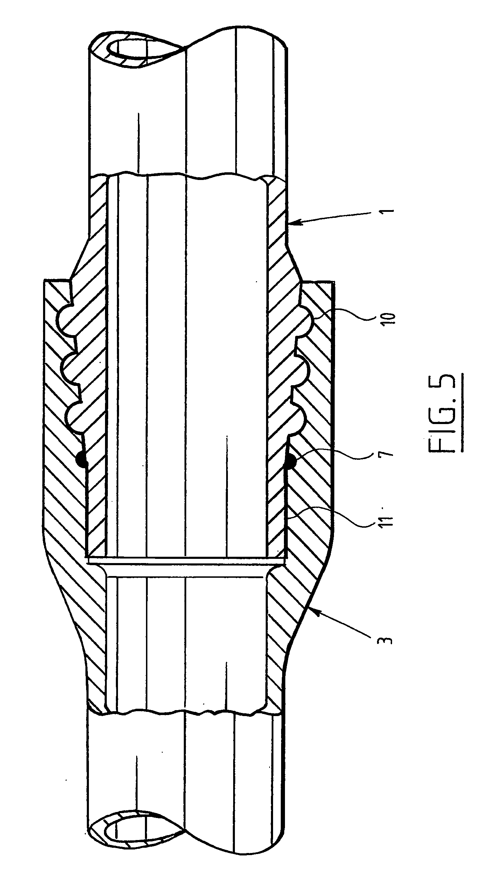

Figure 5 shows an embodiment which is distinguished from the connections shown in the foregoing figures by providing a screw thread 10 which is right-angled on the inside and round on the outside. Tightening is hereby facilitated, while the angle of rotation between the loose and fixed position is also greatly reduced, which saves work when the connection is made. It is pointed out here that the apex angle of the describing cone of the screw thread also plays a part here, as does the ratio of the thread height and the diameter.

A second difference lies in the fact that there follows a cylindrical part 11 connecting onto the conical screw thread 10. This has the result that a better guiding is created during insertion and that a longer distance for the seal is obtained.

## Claims

1. Pipe connection for mutually connecting two pipe pieces (1, 3) made from fibre-reinforced plastic, comprising:
- an external screw thread (10) arranged on a male end (2) of a first pipe piece (1),
- an internal screw thread arranged on a female end (4) of a second pipe piece (3) and fitting onto the external screw thread, and
- a substantially annular cavity (8) which is placed between the screwed-together pipe pieces and which is suitable for filling with a sealing material, wherein the cavity is filled with a solid material, **characterized in that** the cavity is arranged on the inward directed end of the internal screw thread on the female end (4) of the second pipe piece and is filled with an initially liquid and then cured material.

2. Pipe connection as claimed in claim 1, **characterized in that** the external and internal screw thread are connected by a glue layer (7) and that the cavity is filled with the glue with which the screw thread is connected.

3. Pipe connection as claimed in claim 1 or 2, **characterized in that** the cavity (8) is filled with the same type of plastic from which the pipe pieces are manufactured.

4. Pipe connection as claimed in any of the foregoing claims, **characterized in that** the screw thread of the two pipe pieces is conical.

5. Pipe connection as claimed in claim 4, **characterized in that** the half apex angle of the describing cone of the conical screw thread amounts to 0.6°.

6. Pipe connection as claimed in any of the foregoing claims, **characterized in that** the profile height lies between 1.5 and 2.5 mm.

7. Pipe connection as claimed in claim 5 or 6, **characterized in that** each of the pipe pieces comprises between five and seven threads of the screw thread.

8. Pipe connection as claimed in claim 4 or 5, **characterized in that** the screw thread has a rounded profile on the outside and a rectangular profile on the inside.

9. Pipe connection as claimed in claim 8, **characterized in that** the profile height of the screw thread lies between 4 and 25 mm.

10. Pipe connection as claimed in claim 7 or 9, **characterized in that** a cylindrical part (11) is placed connecting onto the conical part, wherein only the conical part is provided with screw thread and wherein the annular cavity (8) lies at the transition between the conical and the cylindrical part.

11. Pipe connection as claimed in any of the claims 10-12, **characterized in that** the external diameter of the male part (2) is smaller than the internal diameter of the female part (4).

12. Method of manufacturing a pipe piece as claimed in any of the preceding claims, **characterized in that** fibres impregnated with a plastic are wound at a predetermined winding angle onto a rotating mandrel and the thus obtained assembly is cured in an oven.

13. Method of manufacturing a pipe connection as claimed in any of the claims 1-11, **characterized in that** glue is applied to the screw thread of the male part (2) of the pipe connection and in the cavity (8), the pipe pieces are screwed into each other and the glue connection is then cured.

## Patentansprüche

1. Rohrverbindung zur gegenseitigen Verbindung von zwei Rohrstücken (1,3), die aus faserverstärktem Kunststoff hergestellt wurden, umfassend:
- ein äußeres Schraubgewinde (10), das auf einem hervorspringenden Ende (2) eines ersten Rohrstücks (1) angeordnet ist,
- ein inneres Schraubgewinde, das auf einem innere Ende (4) eines zweiten Rohrstücks (3) angeordnet ist und auf das äußere Schraubgewinde passt, und
- eine im Wesentlichen ringförmige Aussparung (8), die sich zwischen den zusammengeschraubten Rohrstücken befindet und die zum Befüllen mit einem Dichtmaterial geeignet ist, wobei die Aussparung mit einem Feststoff gefüllt wird,
**dadurch gekennzeichnet, dass** die Aussparung auf dem nach innen gerichteten Ende des inneren Schraubgewindes auf dem inneren Ende (4) des zweiten Rohrstücks angeordnet ist und mit einem anfangs flüssigen und dann gehärteten Material gefüllt wird.

2. Rohrverbindung gemäß Anspruch 1,
**dadurch gekennzeichnet dass**, das äußere und innere Schraubgewinde durch eine Klebeschicht (7) verbunden sind und dass die Aussparung mit dem Kleber gefüllt wird, mit dem das Schraubgewinde verbunden wird.

3. Rohrverbindung gemäß Anspruch 1 oder 2,
**dadurch gekennzeichnet, dass** die Aussparung (8) mit derselben Art von Plastik gefüllt wird, aus dem die Rohrstücke hergestellt wurden.

4. Rohrverbindung gemäß einem der vorhergehenden Ansprüche,
**dadurch gekennzeichnet, dass**
das Schraubgewinde der beiden Rohrstücke konisch ist.

5. Rohrverbindung gemäß Anspruch 4,
**dadurch gekennzeichnet, dass** der halbe Scheitelwinkel des beschreibenden Konus des konischen Schraubgewindes 0,6° beträgt.

6. Rohrverbindung gemäß einem der vorhergehenden Ansprüche,
**dadurch gekennzeichnet, dass**
die Profilhöhe zwischen 1,5 und 2,5 mm beträgt.

7. Rohrverbindung gemäß Anspruch 5 oder 6,
**dadurch gekennzeichnet, dass** jedes der Rohrstücke zwischen fünf und sieben Gewindegänge des Schraubgewindes umfasst.

8. Rohrverbindung gemäß Anspruch 4 oder 5,
**dadurch gekennzeichnet, dass** das Schraubgewinde ein gerundetes Profil auf der Außenseite und ein rechtwinkliges Profil auf der Innenseite aufweist.

9. Rohrverbindung gemäß Anspruch 8,
**dadurch gekennzeichnet, dass**
die Profilhöhe des Schraubgewindes zwischen 4 und 25 mm beträgt.

10. Rohrverbindung gemäß Anspruch 7 oder 9,
**dadurch gekennzeichnet, dass** ein zylindrisches Teil (11) verbindend auf dem konischen Teil angeordnet ist, wobei nur das konische Teil mit einem Schraubgewinde versehen ist und wobei die ringförmige Aussparung (8) am Übergang zwischen dem konischen und dem zylindrischen Teil liegt.

11. Rohrverbindung gemäß einem der Ansprüche 10 bis 12,
**dadurch gekennzeichnet, dass** der Außendurchmesser des hervorspringenden Teils (2) kleiner ist als der Innendurchmesser des inneren Teils (4).

12. Verfahren zur Herstellung eines Rohrstücks gemäß einem der vorhergehenden Ansprüche, **dadurch gekennzeichnet, dass** mit Plastik imprägnierte Fasern in einem bestimmten Wickelwinkel auf einem sich drehenden Dorn gewunden werden und die so erhaltene Gruppe in einem Ofen gehärtet wird.

13. Verfahren der Herstellung einer Rohrverbindung gemäß einem der Ansprüche 1 bis 11, **dadurch gekennzeichnet, dass** Kleber auf das Schraubgewinde des hervorspringenden Teils (2) der Rohrverbindung und in die Aussparung (8) aufgetragen wird, die Rohrstücke ineinander verschraubt werden und die Klebeverbindung dann gehärtet wird.

## Revendications

1. Raccord de tube destiné à raccorder l'un à l'autre deux tronçons de tubes (1, 3) faits d'une matière plastique renforcée de fibres, comprenant :
- un filetage extérieur (10) agencé sur une extrémité mâle (2) d'un premier tronçon de tube (1),
- un filetage intérieur agencé sur une extrémité femelle (4) d'un second tronçon de tube (3) et qui s'ajuste sur le filetage extérieur, et
- une cavité pratiquement annulaire (8) qui est placée entre les tronçons de tubes vissés l'un à l'autre et qui est appropriée pour être remplie d'une matière d'étanchéité, dans lequel la cavité est remplie d'une matière solide, **caractérisé en ce que** la cavité est agencée sur l'extrémité dirigée vers l'intérieur du filetage intérieur situé sur l'extrémité femelle (4) du second tronçon de tube et est remplie d'une matière initialement liquide et durcie par la suite.

2. Raccord de tube selon la revendication 1, **caractérisé en ce que** le filetage extérieur et le filetage intérieur sont assemblés par une couche de colle (7) et **en ce que** la cavité est remplie de la colle avec laquelle le filetage est assemblé.

3. Raccord de tube selon la revendication 1 ou 2, **caractérisé en ce que** la cavité (8) est remplie avec le même type de matière plastique que celui à partir duquel les tronçons de tube sont fabriqués.

4. Raccord de tube selon une quelconque des revendications précédentes, **caractérisé en ce que** le filetage des deux tronçons de tube est conique.

5. Raccord de tube selon la revendication 4, **caractérisé en ce que** le demi-angle aigue du cône qui décrit le filetage conique est de 0,6°.

6. Raccord de tube selon une quelconque des revendications précédentes, **caractérisé en ce que** la hauteur du profil est comprise entre 1,5 et 2,5 mm.

7. Raccord de tube selon la revendication 5 ou 6, **caractérisé en ce que** chacun des tronçons de tubes comprend entre cinq et sept filets du filetage.

8. Raccord de tube selon la revendication 4 ou 5, **caractérisé en ce que** le filetage a un profil arrondi sur le côté extérieur et un profil rectangulaire sur le côté intérieur.

9. Raccord de tube selon la revendication 8, **caractérisé en ce que** la hauteur du profil du filetage est compris entre 4 et 25 mm.

10. Raccord de tube selon la revendication 7 ou 9, **caractérisé en ce qu'**une partie cylindrique (11) est placée en se raccordant à la partie conique, dans laquelle seule la partie conique est munie d'un filetage, et dans laquelle la cavité annulaire (8) se trouve à la transition entre la partie conique et la partie cylindrique.

11. Raccord de tube selon une quelconque des revendications 10 à 12, **caractérisé en ce que** le diamètre extérieur de la partie mâle (2) est plus petit que le diamètre intérieur de la partie femelle (4).

12. Procédé de fabrication d'un tronçon de tube selon une quelconque des revendications précédentes, **caractérisé en ce que** des fibres imprégnées d'une matière plastique sont enroulées avec un angle d'enroulement prédéterminé sur un mandrin tournant et que l'ensemble ainsi obtenu est durci dans un four.

13. Procédé de fabrication d'un raccord de tube selon une quelconque des revendications 1 à 11, **caractérisé en ce que** de la colle est appliquée au filetage de la partie mâle (2) du raccord de tube et dans la cavité (8), les tronçons de tube sont vissés l'un dans l'autre et le joint de colle est ensuite durci.
